# EUROPÄISCHE PATENTANMELDUNG

(11) **EP 1 304 855 A2**
(43) Veröffentlichungstag der Anmeldung: **23.04.2003**
(21) Anmeldenummer: 02021112.4
(22) Anmeldetag: 23.09.2002
(51) Int. Cl.: H04M 3/42

(54) **Anordnung zur Steuerung und/oder Überwachung einer Kommunikationsanlage durch mindestens zwei Anwendungen**

(30) Priorität: 18.10.2001 DE 10151436
(71) Anmelder: SIEMENS AKTIENGESELLSCHAFT, 80333 München (DE)
(72) Erfinder: Rist, Claus, 44795 Bochum (DE); Schroeter, Otto, 45307 Essen (DE)

(57) **Zusammenfassung**

Eine Anordnung dient der Steuerung und/oder Überwachung einer Kommunikationsanlage (1, 1a, 1b, 1c) mit einer ersten Schnittstelle (3, 3a, 3b) durch mindestens zwei Anwendungen (2, 2a, 2b, 2c, 2d), wobei Steuer- und/oder Zustandsdaten über eine die Schnittstelle (3, 3a, 3b) nutzende Verbindung übertragen werden. Zwischen der Kommunikationsanlage (1, 1a, 1b, 1c) und den Anwendungen (2, 2a, 2b, 2c, 2d) ist eine Übertragungseinheit (4, 4a, 4b, 4c) geschaltet mit einer zweiten Schnittstelle zur Kommunikationsanlage (1, 1a, 1b, 1c) hin und dritten Schnittstellen zu den Anwendungen (2, 2a, 2b, 2c, 2d) hin. Die Verbindung verläuft zwischen der ersten und der zweiten Schnittstelle. Mindestens zwei der Anwendungen (2, 2a, 2b, 2c, 2d) sind jeweils an eine der dritten Schnittstellen anschließbar, und die erste Schnittstelle (3, 3a, 3b) und die dritten Schnittstellen verwenden für den Datenaustausch das gleiche Datenformat und stellen die gleichen Funktionen zur Verfügung. Die Übertragungseinheit (4, 4a, 4b, 4c) leitet die Steuerund/oder Zustandsdaten je nach Übertragungsrichtung einerseits der Kommunikationsanlage (1, 1a, 1b, 1c) gebündelt zu, und/oder leitet diese andererseits den betreffenden Anwendungen (2, 2a, 2b, 2c, 2d) zu und/oder stellt sie diesen bereit.

## Beschreibung

Die Erfindung betrifft eine Anordnung zur Steuerung und/oder Überwachung gemäß dem Oberbegriff des Anspruchs 1.

Anordnungen, bei denen Kommunikationsanlagen durch Anwendungen gesteuert oder überwacht werden, sind beispielsweise als CTI-Anwendungen (CTI = Computer Telephony Integration) bekannt. Um eine Kommunikationsanlage durch eine Anwendung, welche in der Regel auf einem PC installiert ist, steuern oder überwachen zu können, ist die Kommunikationsanlage mit einer speziellen Schnittstelle ausgestattet, der sog. CTI-Schnittstelle. Über diese Schnittstelle kann die Anwendung (das Anwendungsprogramm) eine Verbindung, häufig auch als "Link" (engl.: to link = verbinden) bezeichnet, zur Kommunikationsanlage aufbauen, um einerseits durch Kommandos in Form von Steuerdaten Leistungsmerkmale der Kommunikationsanlage zu beeinflussen, oder andererseits Zustandsdaten über einzelne oder alle Teilnehmeranschlüsse zu erlangen. Die Zustandsdaten werden wiederum mit Hilfe besonderer Kommandos in Form von Steuerdaten von den Anwendungen angefordert.

Wenn die auf dem PC installierte Anwendung auf direktem Wege mit der Kommunikationsanlage verbunden ist, spricht man von einer sog. First-Party CTI-Lösung. Um mit mehreren Anwendungsprogrammen auf die gleiche Kommunikationsanlage zuzugreifen, gibt es zwei Möglichkeiten: Die erste Möglichkeit ist, mehrere CTI-Schnittstellen an der Kommunikationsanlage zu verwenden, um mehrere First-Party CTI-Anwendungen mit je einem Link zur Kommunikationsanlage zu betreiben. Die zweite Möglichkeit ist, dass ein Telephonie-Server, häufig auch als CTI-Server bezeichnet, als zentraler Dienst im Verbindungsweg zwischen der Kommunikationsanlage und den PCs mit den Anwendungen geschaltet ist. Solche Anordnungen sind auch als Third-Party CTI-Anwendungen bekannt. Dabei ist ein Teil des Anwendungsprogramms, die sog. Server-Komponente, auf dem Telephonie-Server installiert. Die Server-Komponente kommuniziert über eine einzige CTI-Schnittstelle über einen Link mit der Kommunikationsanlage. Dabei wird in der Regel ein genormtes Datenformat benutzt, welches beispielsweise im CSTA-Phase-III-Protokoll definiert ist. Der andere Teil des Anwendungsprogramms ist als sog. Client-Komponente auf dem PC (PC-Arbeitsplatz) des Anwenders installiert. Die Client-Komponente kommuniziert beispielsweise über ein Netzwerk mit der Server-Komponente. Eine Third-Party CTI-Anwendung besitzt regelmäßig eine Server-Komponente und mehrere Client-Komponenten, die über jeweils einen Link mit der Server-Komponente verbunden sind.

Bei den bekannten CTI-Anwendungen hat sich als nachteilig erwiesen, daß an eine Kommunikationsanlage nur relativ wenige Telephonie-Server bzw. First-Party CTI-Anwendungen gleichzeitig angeschlossen werden können. Die CTI-Schnittstellen gebräuchlicher Kommunikationsanlagen haben zur gleichen Zeit nur eine Verbindung (Link) zu einem Telephonie-Server. Eine Ausnahme bilden zwar die als LAN-Anschlüsse (LAN = Local Area Network) ausgeführten CTI-Schnittstellen, aber auch diese unterstützen in der Regel nur drei gleichzeitige Links zu den Telephonie-Servern. Weiterhin ist auch die Anzahl der CTI-Schnittstellen an den Kommunikationsanlagen beschränkt; sie ist meist auf ein oder zwei Anschlüsse limitiert.

Aufgabe der Erfindung ist es, eine Kommunikationsanlage durch eine nahezu unbegrenzte Anzahl von Anwendungen zu steuern und/oder zu überwachen.

Die Lösung dieser Aufgabe ist durch die im Anspruch 1 angegebenen Merkmale gegeben. Durch die kennzeichnenden Merkmale der Unteransprüche ist die Anordnung in vorteilhafter Weise weiter ausgestaltet.

Die Lösung dieser Aufgabe sieht vor, dass zwischen der Kommunikationsanlage und den Anwendungen eine Übertragungseinheit mit einer zweiten Schnittstelle zur Kommunikationsanlage hin und dritten Schnittstellen zu den Anwendungen hin geschaltet ist, dass die Verbindung zwischen der ersten und der zweiten Schnittstelle verläuft, dass mindestens zwei der Anwendungen jeweils an eine der dritten Schnittstellen anschließbar sind, dass die erste Schnittstelle und die dritten Schnittstellen für den Datenaustausch das gleiche Datenformat verwenden und die gleichen Funktionen zur Verfügung stellen und dass die Übertragungseinheit die Steuer- und/oder Zustandsdaten je nach Übertragungsrichtung einerseits der Kommunikationsanlage gebündelt zuleitet und/oder andererseits den betreffenden Anwendungen zuleitet und/oder bereitstellt, wobei die dritten Schnittstellen physikalisch unabhängig sein können, d.h. dass die Anwendungen, die zentralen Dienste und die Übertragungseinheiten auf unterschiedlichen PCs installiert sind.

Mehrere zentrale Dienste (Telephonie-Server) oder Anwendungen können gleichzeitig an einer Kommunikationsanlage betrieben werden, wenn zwischen der Kommunikationsanlage und den Anwendungen eine Übertragungseinheit mit einer zweiten Schnittstelle zur Kommunikationsanlage hin und dritten Schnittstellen zu den Anwendungen hin geschaltet ist und wenn mindestens zwei der Anwendungen jeweils an eine der dritten Schnittstellen anschließbar sind.

Eine Weiterverwendung vorhandener zentraler Dienste oder vorhandener Anwendungen ist möglich, wenn die erste Schnittstelle und die dritten Schnittstellen für den Datenaustausch das gleiche Datenformat verwenden und die gleichen Funktionen zur Verfügung stellen.

Die Belastung der Schnittstelle der Kommunikationsanlagen wird verringert, indem die Übertragungseinheit die Steuerund/oder Zustandsdaten je nach Übertragungsrichtung einerseits der Kommunikationsanlage gebündelt zuleitet und/oder andererseits den betreffenden Anwendungen zuleitet und/oder bereitstellt.

Verschiedene Kommunikationsanlagen und verschiedene zentrale Dienste mit standardisierter Schnittstelle können dadurch verwendet werden, dass das Datenformat in einem CSTA-Protokoll definiert ist.

Eine sichere und bewährte Art der Datenübertragung ist gegeben, wenn die Verbindung über ein LAN, insbesondere ein IP-Netzwerk, erfolgt.

Wenn zwischen der Übertragungseinheit und den Anwendungen mindestens ein zentraler Dienst geschaltet ist, können mehrere Anwendungen eine Übertragungseinheit gleichzeitig nutzen.

Eine Anwendung kann mit mehreren Kommunikationsanlagen Steuer- und Zustandsdaten austauschen, indem eine der Anwendungen und/oder ein zentraler Dienst gleichzeitig mit mehreren Übertragungseinheiten über ein LAN verbindbar ist bzw. sind.

Der Programmieraufwand bei der Erstellung der Übertragungseinheiten, der zentralen Dienste und/oder der Anwendungen verringert sich, wenn die Übertragungseinheit oder die Übertragungseinheiten, der zentrale Dienst oder die zentralen Dienste und die Anwendungen jeweils die gleiche Bibliothek zur Kommunikation mit der ersten Schnittstelle oder den ersten Schnittstellen und den dritten Schnittstellen verwenden.

Die Änderung von Konfigurationsdaten in allen zentralen Diensten oder Anwendungen bei einer Änderung des Netzes erübrigt sich, wenn bei einer Anordnung mit mehreren Kommunikationsanlagen eine zentrale Datenbank vorgesehen ist, in der die Konfigurationsdaten der Anordnung gespeichert sind, die den Anwendungen und/oder dem zentralen Dienst oder den zentralen Diensten bereitgestellt werden.

Ein Ausführungsbeispiel einer erfindungsgemäßen Anordnung zur Steuerung und/oder Überwachung einer Kommunikationsanlage durch mindestens zwei Anwendungen wird nachfolgend anhand der Zeichnungen beschrieben. Dabei zeigt:
Fig. 1 eine schematische Darstellung einer Anordnung zum Datenaustausch und
Fig. 2 eine Anordnung in einem Netzwerk, welches aus Teilnetzen besteht.

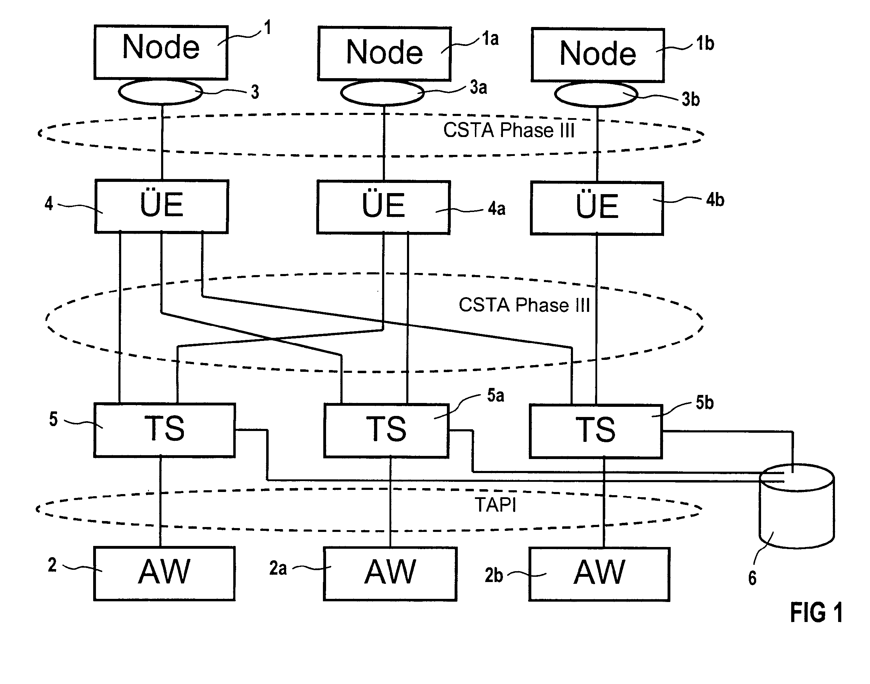

In Fig.1 ist als Anordnung eine CTI-Anordnung gezeigt, die aus Kommunikationsanlagen 1, 1a, 1b (auch: Kommunikationsknoten - engl.: Node) und Anwendungen 2, 2a, 2b besteht, die auf nicht dargestellten PCs installiert sind. Von den Anwendungen 2, 2a, 2b werden Leistungsmerkmale in den Kommunikationsanlagen 1, 1a, 1b mittels übertragender Steuerdaten beeinflusst. Außerdem werden Betriebszustände von einzelnen Teilnehmern, die an den Kommunikationsanlagen 1, 1a, 1b angeschlossen und hier nicht dargestellt sind, den Anwendungen 2, 2a, 2d zur Verfügung gestellt.

Die Kommunikationsanlagen 1, 1a, 1b sind zum Zwecke des Austausches von Steuer- und Zustandsdaten mit CTI-Schnittstellen 3, 3a, 3b ausgestattet. Die CTI-Schnittstellen 3, 3a, 3b sind jeweils mit Übertragungseinheiten 4, 4a, 4b verbunden, die ihrerseits jeweils mit einem oder mehreren Telephonie-Servern 5, 5a, 5b als zentralem Dienst verbunden sind. An den Telephonie-Servern 5, 5a, 5b angeschlossen sind schließlich die Anwendungen 2, 2a, 2b.

Die Verbindungen zwischen den Kommunikationsanlagen 1, 1a, 1b, den Übertragungseinheiten 4, 4a, 4b, den Telephonie-Servern 5, 5a, 5b und den PCs mit den installierten Anwendungen 2, 2a, 2b sind jeweils logische Verbindungen (Links) in einem IP-Netzwerk (IP = Internet Protokoll). Selbstverständlich sind auch andere bekannte Möglichkeiten zur Übertragung der Daten denkbar, beispielsweise die Verwendung serieller Schnittstellen.

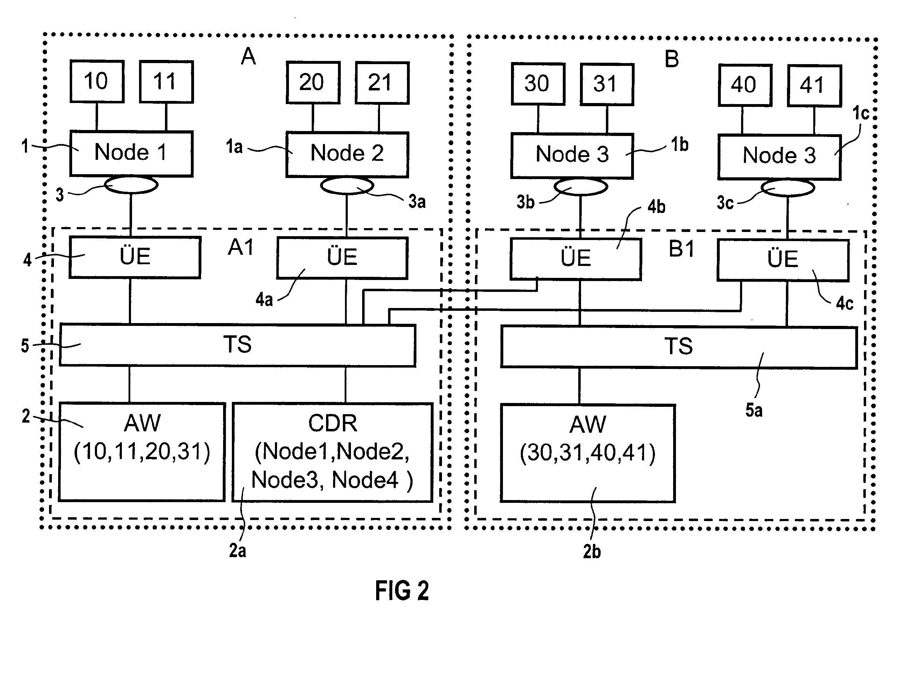

Weiterhin ist eine Datenbank 6 Bestandteil der Anordnung, in der Konfigurationsdaten der Kommunikationsanlagen 1, 1a, 1b abgelegt sind. In der Datenbank 6 werden insbesondere Verzeichnisse darüber geführt, welche Teilnehmer (siehe Fig. 2) an welcher der Kommunikationsanlagen 1, 1a, 1b angeschlossen sind.

Die Datenübertragung zwischen den Anwendungen 2, 2a, 2b und den Kommunikationsanlagen 1, 1a, 1b wird nachfolgend beispielhaft anhand der Steuerdatenübertragung von der Anwendung 2 zur Kommunikationsanlage 1 beschrieben, wobei ein Benutzer der Anwendung 2 eine Änderung eines Leistungsmerkmals für einen bestimmten an einer der Kommunikationsanlagen 1, 1a, 1b angeschlossenen Teilnehmeranschluß mit einer zugeordneten Rufnummer auslöst.

Die Anwendung 2 überträgt hierzu die Information über die Leistungsmerkmal-Änderung sowie die Rufnummer über den zu ändernden Teilnehmeranschluß an den Telephonie-Server 5. Dabei wird zur Datenübertragung eine Programmierschnittstelle mit einem Datenformat verwendet, welches nach dem TAPI-Standard (TAPI = Telephony Application Programming Interface) definiert ist. Der Telephonie-Server 5 baut nun eine Verbindung zur Datenbank 6 auf, übermittelt die Rufnummer des gewünschten Teilnehmeranschlusses und erhält als Antwort von der Datenbank 6 die Information, daß der gewünschte Teilnehmer an der Kommunikationsanlage 1 angeschlossen ist sowie die Netzwerkadresse der Übertragungseinheit 4, die der Kommunikationsanlage 1 zugeordnet ist.

Der Telephonie-Server 5 generiert nun Steuerdaten, die der Leistungsmerkmal-Änderung entsprechen, die bezüglich des Teilnehmers an der Kommunikationsanlage 1 durchgeführt werden soll. Diese Steuerdaten werden nun gemäß der aus der Datenbank 6 ermittelten Netzwerkadresse an die Übertragungseinheit 4 übermittelt. Die Steuerdaten werden dazu in einem Datenformat übertragen, welches in dem CSTA-Phase-III-Protokoll definiert ist. Die Übertragungseinheit 4 überträgt die Steuerdaten dann über die CTI-Schnittstelle 3 an die Kommunikationsanlage 1, wobei ebenfalls das CSTA-Phase-III-Protokoll verwendet wird. In der Kommunikationsanlage 1 werden nun die Leistungsmerkmal-Änderungen vorgenommen.

Eine wichtige Funktion von CTI-Anwendungen ist die Gewinnung und das Anzeigen von Zustandsdaten, die bestimmte oder alle Teilnehmer betreffen, die an einer Kommunikationsanlage 1, 1a, 1b angeschlossen sind. Diese Zustandsdaten umfassen beispielsweise die Information, ob ein Teilnehmeranschluß gerade besetzt ist oder nicht. Diese Informationen werden durch die Überwachung, dem sog. Monitoring, von Teilnehmeranschlüssen gewonnen. Das Monitoring findet in der Kommunikationsanlage 1, 1a, 1b selbst statt.

Wenn in einer Anwendung 2 der Zustand frei oder besetzt eines Teilnehmers der Kommunikationsanlage 1 angezeigt werden soll, sendet die Anwendung 2 zur Gewinnung der Zustandsdaten eine entsprechende Anfrage an den Telephonie-Server 5. Analog zum Vorgehen bei der Übermittlung von Steuerdaten fragt der Telephonie-Server 5 bei der Datenbank 6 die Netzwerkadresse der der Kommunikationsanlage 1 zugeordneten Übertragungseinheit 4 ab. Der Telephonie-Server 5 sendet die Anfrage an diese Netzwerkadresse (die Übertragungseinheit 4). In der Übertragungseinheit 4 wird eine Liste geführt, in der diejenigen Teilnehmer der Kommunikationsanlage 1 verzeichnet sind, die bereits überwacht werden. Falls der interessierende Teilnehmeranschluß nicht in dieser Liste verzeichnet ist, überträgt die Übertragungseinheit 4 eine entsprechende Anfrage mit der Anweisung, an die Kommunikationsanlage 1, den entsprechenden Teilnehmer zu "monitoren". In der Kommunikationsanlage 1 wird nun eine ereignisgesteuerte Abfrage gestartet, die immer dann, wenn sich der Zustand des entsprechenden Teilnehmers ändert, eine entsprechende Meldung generiert, welche dann über die CTI-Schnittstelle 3 an die Übertragungseinheit 4 gesendet wird. Diese Information wird dort jeweils gespeichert bzw. zur Aktualisierung eines vorhandenen Listeneintrags verwendet, so dass in der Übertragungseinheit 4 immer aktuelle Informationen über die Teilnehmerzustände all jener Teilnehmer verzeichnet sind, die von den Anwendungen 2, 2a, 2b überwacht werden.

Immer dann, wenn sich der Zustand eines überwachten Teilnehmeranschlusses verändert, wird eine entsprechende Meldung von der zugeordneten Übertragungseinheit 4, 4a, 4b an jeden der Telephonie-Server 5, 5a, 5b verschickt, der diese Information zum Betrieb der entsprechenden Anwendung 2, 2a, 2b benötigen. In diesem Beispiel ist es der Telephonie-Server 5, der die entsprechende Information von der Übertragungseinheit 4 erhält, um sie dann an die Anwendung 2 weiterzuleiten.

Das Datenformat, welches zur Übertragung der Steuer- und Zustandsdaten verwendet wird, ist ein nach CSTA-Phase-III genormtes Datenformat. Dasselbe Datenformat wird hier sowohl zwischen den Telephonie-Servern 5, 5a, 5b und den Übertragungseinheiten 4, 4a, 4b als auch zwischen und den Übertragungseinheiten 4, 4a, 4b und der Kommunikationsanlage 1, 1a, 1b verwendet. Die Übertragungseinheiten 4, 4a, 4b und die Telephonie-Server 5, 5a, 5b verwenden zur Kommunikation auch die gleiche Software-Bibliothek (DLL = Dynamic Link Library) gemäß ASN.1 (ASN.1 = Abstract Syntax Notation 1, ein nach CCITT X.208, X.680 genormter Standard).

Ein Beispiel einer Anordnung, bei der auf die Kommunikationsanlagen 1b, 1c mit jeweils mehr als einem Link zugegriffen wird, zeigt Fig. 2 in schematischer Darstellung. Ein Netz ist aus 4 Kommunikationsanlagen 1, 1a, 1b, 1c gebildet, mit den zugeordneten Übertragungseinheiten 4, 4a, 4b, 4c, den Telephonie-Servern 5, 5a, den Anwendungen 2, 2a, 2b und den Teilnehmern 10, 11, 20, 21, 30, 31, 40, 41. Die Kommunikationsanlagen 1, 1a und die Kommunikationsanlagen 1b, 1c bilden zusammen mit den jeweils zugeordneten Übertragungseinheiten 4, 4a bzw. 4b, 4c, den Teilnehmern 10, 11, 20, 21 bzw. 30, 31, 40, 41, den Telephonie-Servern 5 bzw. 5a und den Anwendungen 2, 2a bzw. 2b zwei räumlich und funktional getrennte Einheiten, die als Inseln A, B bezeichnet werden. Jede Insel A, B verfügt über einen Applikationsserver A1, B1, der die Funktionalität der jeweiligen Übertragungseinheiten 4, 4a bzw. 4b, 4c, der Telephonie-Server 5 bzw. 5a sowie der Anwendungen 2, 2a bzw. 2b in einem Gerät vereint.

Eine zentrale Datenbank 6 ist in diesem Ausführungsbeispiel nicht vorhanden, weil hier die Zuordnung der Teilnehmer 10, 11, 20, 21, 30, 31, 40, 41 zu den Kommunikationsanlagen 1, 1a, 1b, 1c sowie die Zuordnung der Netzwerkadressen zu den Übertragungseinheiten 4, 4a, 4b, 4c in den Telephonie-Servern 5, 5a selbst administriert ist.

In Insel A ist eine Anwendung 2a als Gesprächsdatenerfassung CDR (CDR = Call Detail Recording) zum Zwecke der Gebührenerfassung am Telephonie-Server 5 angeschaltet. Zur Gesprächsdatenerfassung der Gespräche aller Teilnehmer 10, 11, 20, 21, 30, 31, 40, 41 werden nicht nur Zustandsdaten aus den Kommunikationsanlagen 1, 1a der eigenen Insel A, also Daten aus den Übertragungseinheiten 4, 4a benötigt, sondern auch solche von den Übertragungseinheiten 4b, 4c. Die Übertragungseinheiten 4b, 4c bedienen aus diesem Grund in Richtung der Telephonie-Server 5, 5a jeweils zwei Links zur gleichen Zeit. Während zwischen den Kommunikationsanlagen 1, 1a und den zugeordneten Übertragungseinheiten 4, 4a jeweils nur ein Link notwendig ist, stellt jede der Übertragungseinheiten 4, 4a den Telephonie-Servern 5, 5a jeweils zwei CTI-Schnittstellen 3, 3a, 3b, 3c zur Verfügung.

Der zusätzliche Link an der Übertragungseinheit 4b wird auch von der Anwendung 2 genutzt, die auf die Leistungsmerkmale der Kommunikationsanlage 3 zugreift, an die der Teilnehmer 31 angeschlossen ist. Die Anwendung 2 greift so indirekt gleichzeitig auf die CTI-Schnittstellen 3, 3a, 3b, 3c mehrerer Kommunikationsanlagen 1, 1a, 1b zu, als ob am Telephonie-Server 5 quasi nur eine einzige Kommunikationsanlage 1, 1a, 1b angeschlossen wäre. Diese Ausführung kann man auch als "One-System-Image" bezeichnen, in dem solche Anwendungen 2, 2a, 2b eingesetzt werden können, die aus CTI-Anwendungen mit nur einer Kommunikationsanlage 1, 1a, 1b, 1c bekannt sind. Dabei kommunizieren die Kommunikationsanlagen 1, 1a, 1b, 1c mit den jeweiligen Übertragungseinheiten 4, 4a, 4b, 4c in der Weise, als wäre jeweils nur ein Telephonie-Server 5, 5a an jeder CTI-Schnittstelle 3, 3a, 3b, 3c direkt angeschlossen, so dass folglich die üblichen CTI-Schnittstellen 3, 3a, 3b, 3c der Kommunikationsanlagen 1, 1a, 1b, 1c verwendet werden können.

## Patentansprüche

1. Anordnung zur Steuerung und/oder Überwachung einer Kommunikationsanlage (1, 1a, 1b) mit einer ersten Schnittstelle (3, 3a, 3b) durch mindestens zwei Anwendungen (2, 2a, 2b),
wobei Steuer- und/oder Zustandsdaten über eine die Schnittstelle (3, 3a, 3b) nutzende Verbindung übertragen werden,
**dadurch gekennzeichnet,**
**dass** zwischen der Kommunikationsanlage (1, 1a, 1b) und den Anwendungen (2, 2a, 2b) eine Übertragungseinheit (4, 4a, 4b) mit einer zweiten Schnittstelle zur Kommunikationsanlage (1, 1a, 1b) hin und dritten Schnittstellen zu den Anwendungen hin geschaltet ist,
**dass** die Verbindung zwischen der ersten und der zweiten Schnittstelle verläuft,
**dass** mindestens zwei der Anwendungen (2, 2a, 2b) jeweils an eine der dritten Schnittstellen anschließbar sind,
**dass** die erste Schnittstelle (3, 3a, 3b) und die dritten Schnittstellen für den Datenaustausch das gleiche Datenformat verwenden und die gleichen Funktionen zur Verfügung stellen und
**dass** die Übertragungseinheit (4, 4a, 4b) die Steuer- und/oder Zustandsdaten je nach Übertragungsrichtung einerseits der Kommunikationsanlage (1, 1a, 1b) gebündelt zuleitet und/oder andererseits den betreffenden Anwendungen (2, 2a, 2b) zuleitet und/oder bereitstellt.

2. Anordnung nach Anspruch 1,
**dadurch gekennzeichnet,**
**dass** das Datenformat in einem CSTA-Protokoll definiert ist.

3. Anordnung nach einem der Ansprüche 1 oder 2,
**dadurch gekennzeichnet,**
**dass** die Verbindung über ein LAN, insbesondere ein IP-Netzwerk, erfolgt.

4. Anordnung nach einem der Ansprüche 1 - 3,
**dadurch gekennzeichnet,**
**dass** zwischen der Übertragungseinheit (4, 4a, 4b, 4c) und den Anwendungen (2, 2a, 2b, 2c, 2d) mindestens ein zentraler Dienst geschaltet ist.

5. Anordnung nach einem der Ansprüche 1 - 4,
**dadurch gekennzeichnet,**
**dass** eine der Anwendungen (2, 2a, 2b, 2c, 2d) und/oder ein zentraler Dienst gleichzeitig mit mehreren Übertragungseinheiten (4, 4a, 4b, 4c) über ein LAN verbindbar ist bzw. sind.

6. Anordnung nach einem der Ansprüche 1 - 5,
**dadurch gekennzeichnet,**
**dass** die Übertragungseinheit (4, 4a, 4b, 4c) oder die Übertragungseinheiten (4, 4a, 4b, 4c), der zentrale Dienst oder die zentralen Dienste und die Anwendungen (2, 2a, 2b, 2c, 2d) jeweils die gleiche Bibliothek zur Kommunikation mit der ersten Schnittstelle (3, 3a, 3b) oder den ersten Schnittstellen (3, 3a, 3b) und den dritten Schnittstellen verwenden.

7. Anordnung nach einem der Ansprüche 1 - 6,
**dadurch gekennzeichnet,**
**dass** bei einer Anordnung mit mehreren Kommunikationsanlagen (1, 1a, 1b, 1c) eine zentrale Datenbank (6) vorgesehen ist, in der die Konfigurationsdaten der Anordnung gespeichert sind, die den Anwendungen (2, 2a, 2b, 2c, 2d) und/oder dem zentralen Dienst oder den zentralen Diensten bereitgestellt werden.
